# EUROPEAN PATENT APPLICATION

(11) **EP 4 350 638 A1**
(43) Date of publication of application: **10.04.2024**
(21) Application number: 22810411.3
(22) Date of filing: 17.05.2022
(51) Int. Cl.: G06V 10/00

(54) **DETECTION METHOD AND SYSTEM FOR BASE-STATION FEEDER LINE, AND RELATED APPARATUS**

(30) Priority: 24.05.2021 CN 202110564422
(71) Applicant: ZTE Corporation, Shenzhen, Guangdong 518057 (CN)
(72) Inventor: FAN, Guotian, Shenzhen, Guangdong 518057 (CN); HONG, Ruiqiang, Shenzhen, Guangdong 518057 (CN); LI, Ning, Shenzhen, Guangdong 518057 (CN); ZHANG, Hai, Shenzhen, Guangdong 518057 (CN)
(74) Representative: Ipsilon
(86) International application number: PCT/CN2022/093233
(87) International publication number: WO 2022/247684

(57) **Abstract**

Provided in the present disclosure are a detection method and system for a base station feeder line, and a related apparatus. The method includes: storing, by an image acquisition terminal, a collected feeder line image of a base station to be detected and an identifier of the corresponding base station to be detected in correspondence; and searching for and acquiring, by an image processing terminal, a target feeder line image according to a detection request, performing image preprocessing on the target feeder line image to convert the target feeder line image into a feature grayscale image, comparing the obtained feature grayscale image with a standard feeder line feature grayscale image, and determining, according to a comparison result, whether a feeder line of a target base station to be detected is correctly installed.

## Description

### TECHNICAL FIELD

Embodiments of the present disclosure relate to the technical fields of communications and image processing, and particularly relate to a detection method and system for a base-station feeder line, and a related apparatus.

### BACKGROUND

For the 5^{th} generation mobile networks (5G), base stations, as a core device of a 5G network, provide wireless coverage, and implement wireless signal transmission between a wired communication network and wireless terminals. The architecture and form of the base stations directly affect how the 5G network will be deployed. In the technical standards, the frequency band of 5G is far higher than that of other existing networks, and the 5G network mainly works in a frequency band of 3000 to 5000 MHz at present. Since a higher frequency leads to greater attenuation in signal propagation, the 5G network needs a higher density of the base stations. The total number of the base stations has now exceeded 700,000.

The higher density of the base stations increases the workload of base-station feeder line detection. Moreover, considering that a base station is typically arranged at a top of a building, detecting whether a base-station feeder line is correctly installed is generally performed in a visual manner by a person climbing up the building, which involves great labor and time consumption, as well as certain personal safety hazards. Meanwhile, the existing detection solution completely depends on manual visual inspection, which is subjective and can easily lead to an inaccurate detection result and a low detection efficiency.

### SUMMARY

The present disclosure provides an image processing method, including: searching for and acquiring, based on an identifier of a target base station to be detected in a detection request, a matched target feeder line image, wherein a feeder line image of a base station to be detected is acquired by an image acquisition terminal, and the acquired feeder line image and an identifier of the base station to be detected are stored in correspondence; performing image preprocessing on the target feeder line image, and converting the target feeder line image subjected to the image preprocessing into a feature grayscale image; and comparing the feature grayscale image with a standard feeder line feature grayscale image, and determining, according to a comparison result, whether a feeder line of the target base station to be detected is correctly installed.

The present disclosure further provides an image processing apparatus, including: an acquisition module configured to search for and acquire, based on an identifier of a target base station to be detected in a detection request, a matched target feeder line image, wherein a feeder line image of a base station to be detected is acquired by an image acquisition terminal, and the acquired feeder line image and an identifier of the base station to be detected are stored in correspondence; a conversion module configured to perform image preprocessing on the target feeder line image, and convert the target feeder line image subjected to the image preprocessing into a feature grayscale image; and a comparison module configured to compare the feature grayscale image with a standard feeder line feature grayscale image, and determine, according to a comparison result, whether a feeder line of the target base station to be detected is correctly installed.

The present disclosure further provides a detection method for a base-station feeder line, including: acquiring, by an image acquisition terminal, a feeder line image of a base station to be detected, and storing the acquired feeder line image and an identifier of the base station to be detected in correspondence; searching for and acquiring, by an image processing terminal, a matched target feeder line image based on an identifier of a target base station to be detected in a detection request; performing, by the image processing terminal, image preprocessing on the target feeder line image, and converting the target feeder line image subjected to the image preprocessing into a feature grayscale image; and comparing, by the image processing terminal, the feature grayscale image with a standard feeder line feature grayscale image, and determining, according to a comparison result, whether a feeder line of the target base station to be detected is correctly installed.

The present disclosure further provides a detection system for a base-station feeder line, including: an image acquisition terminal and an image processing terminal, wherein the image acquisition terminal is configured to acquire a feeder line image of a base station to be detected, and store the acquired feeder line image and an identifier of the base station to be detected in correspondence; the image processing terminal is configured to searche for and acquire, based on an identifier of a target base station to be detected in a detection request, a matched target feeder line image, perform image preprocessing on the target feeder line image, and convert the target feeder line image subjected to the image preprocessing into a feature grayscale image, compare the feature grayscale image with a standard feeder line feature grayscale image, and determine, according to a comparison result, whether a feeder line of the target base station to be detected is correctly installed.

The present disclosure further provides an electronic device, including: a processor; and a memory storing computer-executable instructions thereon which, when executed by the processor, cause the processor to perform the image processing method according to the present disclosure.

The present disclosure further provides a computer-readable storage medium having one or more programs stored thereon which, when executed by one or more processors, cause the one or more processors to perform the image processing method according to the present disclosure.

### BRIEF DESCRIPTION OF DRAWINGS

To illustrate the technical solutions in one or more embodiments of the present disclosure or the existing art more clearly, the drawings to be used in description of the one or more embodiments or the existing art will be briefly described below. Apparently, the drawings in the following description are merely some embodiments recited in the present disclosure, and other drawings may be derived from these drawings by those of ordinary skill in the art without any creative labor. In the drawings,
FIG. 1 is a schematic diagram of installed base-station feeder lines involved in the present disclosure;
FIG. 2 is a schematic diagram of a scenario architecture to which a detection solution for a base-station feeder line according to the present disclosure is applicable;
FIGs. 3A and 3B are schematic flowcharts of respective detection methods for a base-station feeder line according to the present disclosure;
FIG. 4 is a schematic flowchart of an image processing terminal performing image preprocessing on a target feeder line image according to the present disclosure;
FIG. 5 is a schematic diagram of the selected feeder line markers and corresponding HSV values according to the present disclosure;
FIG. 6 is a schematic diagram of a target feeder line image in the format of an HSV image according to the present disclosure;
FIG. 7 is a schematic flowchart of an image processing terminal converting a target feeder line image subjected to the image preprocessing into a feature grayscale image according to the present disclosure;
FIG. 8A is a schematic diagram of dilation and erosion operations according to the present disclosure;
FIG. 8B is a schematic diagram of a feeder line image subjected to the dilation and erosion operations according to the present disclosure;
FIG. 9A is a schematic comparison flowchart according to the present disclosure;
FIG. 9B is a schematic detection flowchart according to the present disclosure;
FIGs. 10A and 10B are schematic structural diagrams of respective detection systems for a base-station feeder line according to the present disclosure;
FIG. 11 is a schematic flowchart of an image processing method according to the present disclosure; and
FIG. 12 is a schematic structural diagram of an image processing apparatus according to the present disclosure.

### DETAIL DESCRIPTION OF EMBODIMENTS

In order to enable those skilled in the art to better understand the technical solutions of the present disclosure, the technical solutions of one or more embodiments of the present disclosure will be clearly and completely described below in conjunction with the accompanying drawings of one or more embodiments of the present disclosure. Apparently, the described one or more embodiments are merely some, but not all embodiments of the present disclosure. All other embodiments, which can be obtained by those of ordinary skill in the art based on one or more embodiments of the present disclosure without any creative labor, shall belong to the protection scope of the present disclosure.

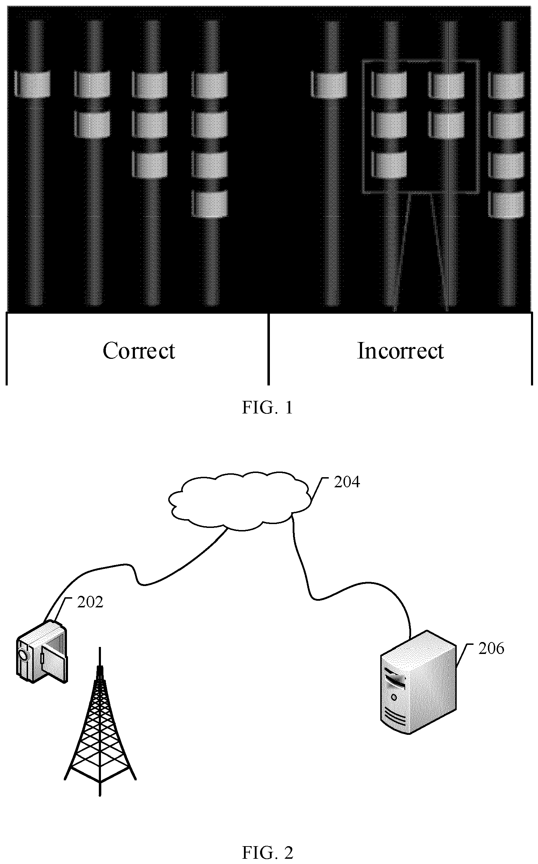

To ensure normal operation of a base station, detection of the installed feeder lines is desired, and the number of feeder line markers is generally used for distinguishing. FIG. 1 shows the requirement of feeder line installation, i.e., the number of feeder line markers increases or decreases from left to right. When the increasing or decreasing order is not satisfied, the installation is considered incorrect.

In the existing art, the detection of a base-station feeder line has the problems of unreliability and insecurity, and thus, the present disclosure provides a novel detection solution for a feeder line in which: an image acquisition terminal sends an acquired feeder line image of a base station to be detected to a cloud server, and the cloud server stores the acquired feeder line image and an identifier of the corresponding base station to be detected in correspondence; an image processing terminal may search for and acquire a target feeder line image from the cloud server according to a detection request, perform image preprocessing on the target feeder line image to convert the target feeder line image into a feature grayscale image, compare the obtained feature grayscale image with a standard feeder line feature grayscale image, and determine, according to a comparison result, whether a feeder line of a target base station to be detected is correctly installed. In this manner, automatic detection can be realized, detection cost and potential safety hazards are reduced, and detection accuracy and efficiency are improved.

Before introducing the detection solution for a base-station feeder line provided by the present disclosure, a scenario architecture to which the detection solution for a base-station feeder line is applicable is first briefly introduced. Referring to FIG. 2, an image acquisition terminal 202 may be a mobile terminal, and is not necessarily installed near the base station to be detected. For example, the image acquisition terminal 202 may be a handheld camera, or a drone with an image acquisition function. When there is an acquisition service request or a detection service request, the image acquisition terminal 202 is arranged near a feeder line of the base station to be detected for capturing. A cloud server 204 is configured to store the acquired feeder line image, which is safe and efficient, and can implement mass storage and be easily accessed by a detection party. An image processing terminal 206 may obtain a feeder line image from the cloud server 204 and perform a series of image processing on the feeder line image to automatically detect whether the feeder line is installed correctly. It should be understood that the image processing terminal 206 may be remotely cooperated with the image acquisition terminal 202 and/or the cloud server 204 to reduce human intervention as much as possible, and reduce the detection error rate and the detection safety hazards. It should be appreciated that the architecture shown in FIG. 2 is an exemplary system architecture, and in practical implementations, the system may not include the cloud server, in which case, the storage function of the cloud server may be implemented by the image processing terminal.

The detection solution for a base-station feeder line of the present disclosure will be described in detail below by way of specific examples.

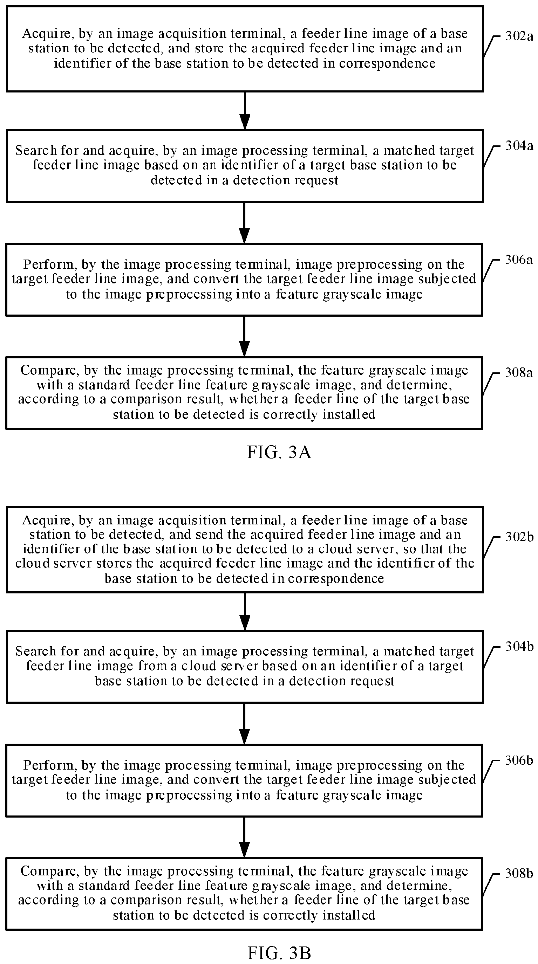

Referring to FIG. 3A, a detection method for a base-station feeder line provided by the present disclosure may include the following operations 302a to 308a.

At operation 302a, a feeder line image of a base station to be detected is acquired by an image acquisition terminal, and the acquired feeder line image and an identifier of the base station to be detected are stored in correspondence.

It should be understood that the image acquisition terminal here may send the acquired feeder line image and an identifier of the corresponding base station to be detected to an image processing terminal or a cloud server for storage.

At operation 304a, a matched target feeder line image is searched for and acquired by an image processing terminal based on an identifier of a target base station to be detected in a detection request.

The image processing terminal may search for and acquire, based on the identifier of the target base station to be detected in the detection request, the matched target feeder line image locally or from the cloud server.

At operation 306a, image preprocessing on the target feeder line image is performed by the image processing terminal, and the target feeder line image subjected to the image preprocessing is converted into a feature grayscale image.

At operation 308a, the feature grayscale image is compared with a standard feeder line feature grayscale image by the image processing terminal, and it is determined, according to a comparison result, whether a feeder line of a target base station to be detected is correctly installed.

Referring to FIG. 3B, another detection method for a base-station feeder line provided by the present disclosure may include the following operations 302b to 308b.

At operation 302b, a feeder line image of a base station to be detected is acquired by an image acquisition terminal, and the acquired feeder line image and an identifier of the base station to be detected are sent to a cloud server, so that the cloud server stores the acquired feeder line image and the identifier of the base station to be detected in correspondence.

The feeder line image may include a feeder line picture or a feeder line video. The image acquisition terminal may use a base station number generated by a local positioning device as the identifier of the base station to be detected; or a base station number obtained by scanning a base station barcode at a position of the feeder line may be used as the identifier of the base station to be detected.

In the present disclosure, the image acquisition terminal may be a contact-type handheld image capturing device, such as a handheld camera, a mobile phone, a tablet or the like; or may be a non-contact image capturing device, such as a drone with an image acquisition function or the like. Accordingly, the specific implementation manner of acquiring the feeder line image differs with the specific type of the image acquisition terminal.

When the image acquisition terminal is a contact-type handheld image capturing device, the image acquisition terminal acquiring the feeder line image of the base station to be detected may be specifically implemented by: capturing, by the contact-type handheld image capturing device, the feeder line image of the base station to be detected in response to a touch control action of a user.

When the image acquisition terminal is a non-contact image capturing device, the image acquisition terminal acquiring the feeder line image of the base station to be detected may be specifically implemented by: capturing, by the non-contact image capturing device, the feeder line image of the base station to be detected in response to remote control of a user.

Either can implement acquisition of the feeder line image, and facilitate later automatic detection of whether the feeder line is installed correctly. If permissible, the feeder line image may be acquired by the non-contact image capturing device so that the subjectivity caused by manual data acquisition can be completely avoided, and potential safety hazards can be avoided. As can be seen, acquiring and detecting the feeder line image in a non-contact mode is more objective and accurate, and is safer and more reliable.

At operation 304b, a matched target feeder line image is searched for and acquired by an image processing terminal from a cloud server based on an identifier of a target base station to be detected in a detection request.

The detection request may be initiated by a detection party, and may carry the identifier of the target base station to be detected. In addition, other information, such position information and location information of the target base station to be detected, and the like, may be included for the detection service.

At operation 306b, image preprocessing on the target feeder line image is performed by the image processing terminal, and the target feeder line image subjected to the image preprocessing is converted into a feature grayscale image.

The operation 306b may be divided into two parts, i.e., image preprocessing and grayscale image conversion.

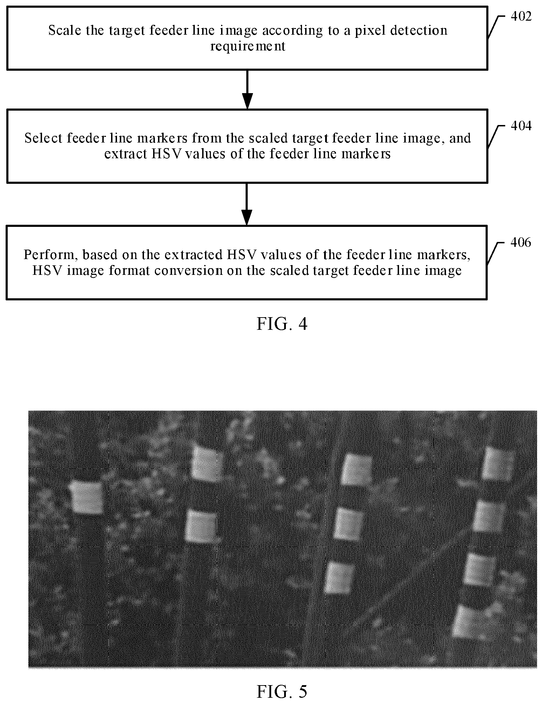

FIG. 4 is a schematic flowchart of an image processing terminal performing image preprocessing on a target feeder line image according to the present disclosure.

Referring to FIG. 4, the image processing terminal performing image preprocessing on the target feeder line image may include operations 402 to 406.

At operation 402, the target feeder line image is scaled according to a pixel detection requirement.

After the feeder line image acquired from the cloud server is read to the local, the image may be scaled without affecting detection of the feeder line, so that the feeder line image meets a preset pixel detection requirement.

At operation 404, feeder line markers are selected from the scaled target feeder line image, and HSV values of the feeder line markers are extracted.

Referring to FIG. 5, feeder line markers may be selected from the feeder line image by manual assisted touch or automatic marking, and hue saturation value (HSV) values for the respective selected feeder line markers may be extracted.

At operation 406, HSV image format conversion is performed on the scaled target feeder line image based on the extracted HSV values of the feeder line markers.

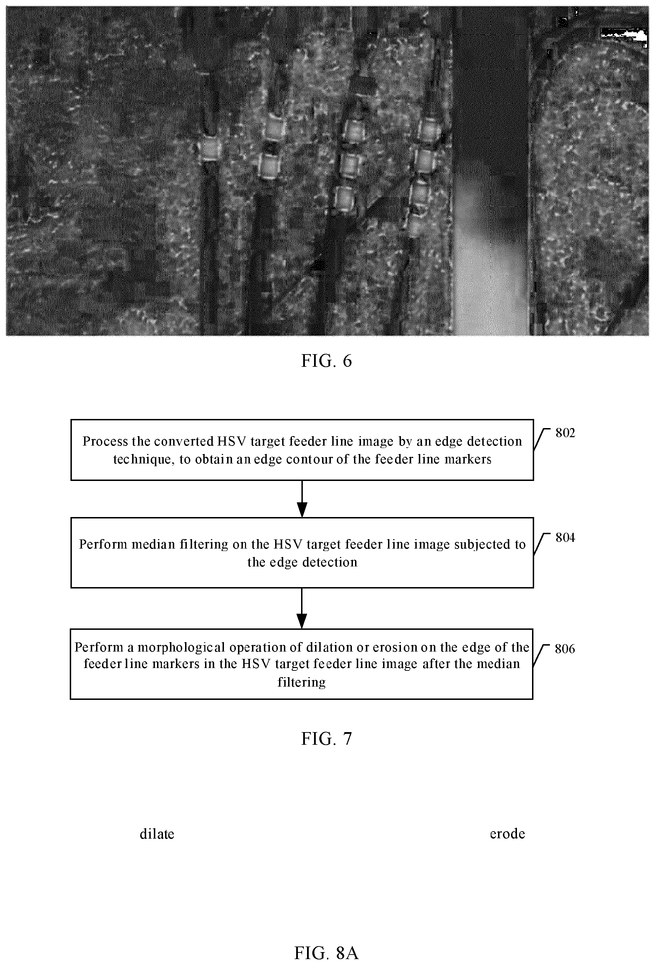

The target feeder line image acquired from the cloud server may be in the format of an RGB image, and therefore, the target feeder line image shown in FIG. 5 is desired to be converted into an HSV image based on the HSV values of the feeder line markers. The converted image may refer to FIG. 6.

After the above series of image preprocessing on the target feeder line image, a feeder line in the obtained HSV target feeder line image may be further identified.

FIG. 7 is a schematic flowchart of an image processing terminal converting a target feeder line image subjected to the image preprocessing into a feature grayscale image according to the present disclosure.

Referring to FIG. 7, the image processing terminal converting the target feeder line image subjected to the image preprocessing into the feature grayscale image may include operations 802 to 806.

At operation 802, the converted HSV target feeder line image is processed by an edge detection technique, to obtain an edge contour of the feeder line markers.

The edge detection technique is essentially a filtering calculation, and different operators may lead to different extraction effects. Common edge detection techniques include: Sobel edge detection operator, Laplacian edge detection operator, and Canny edge detection operator.

The Sobel operator detection method has a better processing effect on images with gradually changed grayscales and more noise, but is not very accurate in edge positioning, where the edge of the image has more than one pixel. When the requirement on precision is not very high, the Sobel operator is a more common edge detection method.

The Laplacian operator is more sensitive to noise, and thus is rarely used for edge detection, but for judging whether an edge pixel is regarded as a bright area or a dark area of an image. The Laplacian of Gaussian (LOG) operator is a second derivative operator that will produce a steep zero crossing at the edge. The Laplacian operator is isotropic and non-directional, and can sharpen a boundary or line of any direction, which is the greatest advantage of the Laplacian operator over other algorithms.

The Canny edge detection operator is not easily interfered by noise, and can detect actual weak edges. The advantage of this operator is that strong and weak edges are detected separately using two different thresholds, and only when a weak edge is connected to a strong edge the weak edge is included in the output image. The goal of the Canny method is to find an optimal edge. The optimal edge is defined as including: good detection, i.e., the algorithm can identify as many actual edges in the image as possible; good localization, i.e., the identified edges are as close as possible to the actual edges in the actual image; minimum response, i.e., each edge in the image can be identified only once, and possible image noise should not be identified as an edge.

When the image processing terminal processes the converted HSV target feeder line image with the Canny edge detection operator, the processing may include the following operations 1 to 5.

At operation 1, a Gaussian filter is used to smooth and filter noise from the converted HSV target feeder line image.

In order to minimize the effect of noise on the edge detection result, the noise should be filtered to prevent false detection caused by the noise. To smooth the image, the Gaussian filter may be convolved with the image to smooth the image and reduce apparent noise effects on an edge detector.

At operation 2, a gradient value and a direction of each pixel in the processed HSV target feeder line image are calculated.

At operation 3, non-maximum suppression is performed on each pixel based on the calculated gradient value and direction.

Non-maximum suppression is an edge thinning technique that works to "thin" edges. After the gradient calculation on the image, the edges extracted based on the gradient values alone are still blurred. Non-maximum suppression may help suppress all gradient values outside of a local maximum to 0. The algorithm for non-maximum suppression of each pixel in the gradient image includes: comparing a gradient intensity of a current pixel with that of two pixels in positive and negative gradient directions, reserving the pixel as an edge point if the gradient intensity of the current pixel is the maximum compared with that of the other two pixels; and otherwise, suppressing the pixel. For more accurate calculations, linear interpolation is usually adopted between two adjacent pixels across the gradient direction to obtain the pixel gradient to be compared.

At operation 4, the edge is further optimized using dual threshold edge detection. If the gradient value of an edge pixel is greater than a higher threshold, the edge pixel is marked as a strong edge pixel; if the gradient value of an edge pixel is less than the higher threshold and greater than a lower threshold, the edge pixel is marked as a weak edge pixel; and if the gradient value of an edge pixel is less than the lower threshold, the edge pixel is suppressed.

After the non-maximum suppression is applied, the remaining pixels can more accurately represent actual edges of the image. However, there are still some edge pixels caused by noise and color variations. To address these spurious responses, the edge pixels should be filtered with a weak gradient value, while edge pixels with higher gradient values are reserved, which can be achieved by selecting higher and lower thresholds. If the gradient value of an edge pixel is greater than the higher threshold, the edge pixel is marked as the strong edge pixel; if the gradient value of an edge pixel is less than the higher threshold and greater than the lower threshold, the edge pixel is marked as the weak edge pixel; and if the gradient value of an edge pixel is less than the lower threshold, the edge pixel is suppressed. The choices of the thresholds depend on content of the given input image.

At operation 5, a final edge contour of the feeder line markers is determined by suppressing isolated weak edge pixels.

The pixels that are classified as strong edges are determined as edges, because they are extracted from actual edges of the image. However, there will be some debate regarding weak edge pixels, as these pixels may be extracted from actual edges, or may be derived from noise or color variations. In order to obtain an accurate result, weak edges caused by noise or the like should be suppressed. Typically, weak edge pixels caused by actual edges will be connected to the strong edge pixels, while those due to noise responses are not connected. To track edge connection, each weak edge pixel and 8 neighborhood pixels around the weak edge pixel may be checked, and the weak edge pixel may be reserved as an actual edge as long as any one of the 8 neighborhood pixels is the strong edge pixel.

At operation 804, median filtering is performed on the HSV target feeder line image subjected to the edge detection.

The median filtering is a non-linear smoothing technique that sets a grayscale value of each pixel as a median value of grayscale values of all pixels within a certain neighborhood window of that pixel. Under certain conditions, the median filtering can overcome image detail blurring caused by common linear filters (such as a block filter, an average filter and the like). It is very effective for filtering pulse interference and image scanning noise, and is often used for edge information protection. The median filtering can reserve characteristics of the edges, which is also useful in situations where edge blurring is undesirable, and thus is a very classical method for noise smoothing. In order to perform the median filtering on the image, the image obtained by the Canny edge detection operator is further denoised to exclude relatively small independent noise in the image.

At operation 806, a morphological operation of dilation or erosion is performed on the edge of the feeder line markers in the HSV target feeder line image after the median filtering.

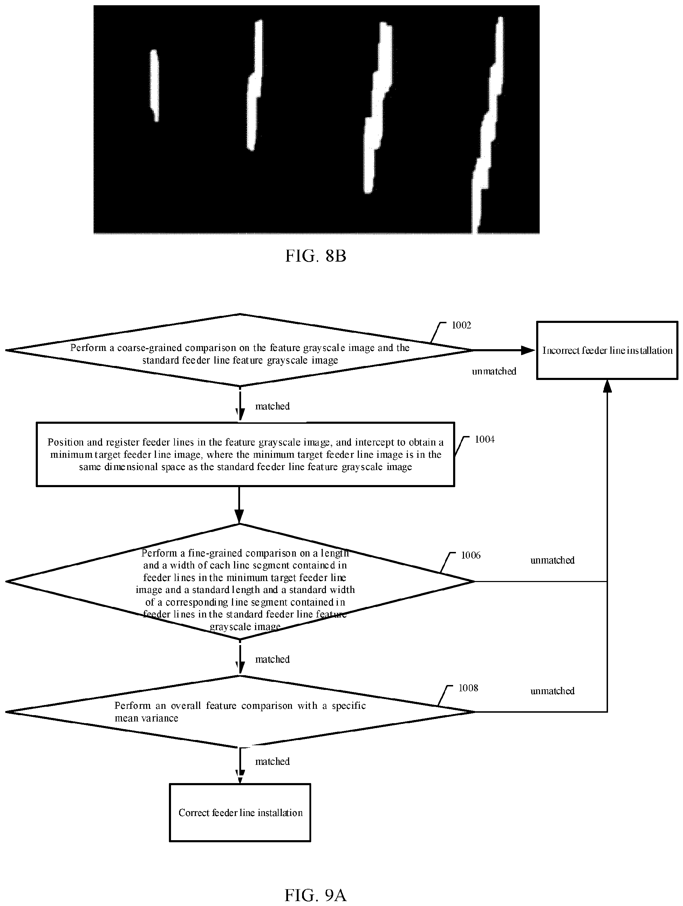

Dilation is a morphological operation that dilates an edge of an object, and erosion is a morphological operation that erodes an edge of an object. The dilation and erosion operations are as shown in FIG. 8A. In implementations, dilation or erosion may be performed according to specific requirements of the HSV target feeder line image. For example, line segments of some feeder lines are dilated, while line segments of other feeder lines are eroded. FIG. 8B shows the HSV target feeder line image after dilation or erosion.

At operation 308b, the feature grayscale image is compared with a standard feeder line feature grayscale image by the image processing terminal, and it is determined, according to a comparison result, whether a feeder line of a target base station to be detected is correctly installed.

The comparison process of operations 308a and 308b may be referred to FIG. 9A, which includes operations 1002 to 1008.

At operation 1002, a coarse-grained comparison is performed on the feature grayscale image and the standard feeder line feature grayscale image through edge contour searching and line segment counting, and it is determined that the feeder line is installed incorrectly in a case of an unmatched coarse-grained comparison result; and proceeds to operation 1004 in a case of a matched coarse-grained comparison result.

The feature grayscale image previously obtained is traversed by searching the edge contour to find out and reserve connected line segments, and count the number of line segments as k, which is then compared with the number of line segments k-std in the standard grayscale feeder line image. A further comparison is performed if the numbers of line segments are consistent, and the feeder line is determined to be installed incorrectly if the numbers of line segments are not consistent. Through the contour searching and count comparison, a rough comparison of the feeder line image is completed in a coarse-grained mode, and provides the premise of a further fine-grained comparison.

At operation 1004, feeder lines in the feature grayscale image are positioned and registered, and intercepting is performed to obtain a minimum target feeder line image, where the minimum target feeder line image is in the same dimensional space as the standard feeder line feature grayscale image.

The positioning and registering feeder lines in the feature grayscale image may include: recording a number of a pixel in the feature grayscale image as (i, j), and a size of the image as m×n, and setting initial values of four variables, imin, imax, jmin and jmax, to 0, 0, m-1 and n-1, respectively; starting from a point (0, 0) and traversing all pixels in the grayscale image, continuing traversing if a grayscale value of a pixel is higher than a preset threshold ε, and comparing, if the grayscale value of the pixel is lower than the preset threshold ε, the pixel with the four variables to determine whether to assign the current i value to imin or imax, and whether to assign the current j value to jmin or jmax according to a comparison result. The image positioning is a preparation for further target image interception, which can reduce undesired comparison areas and improve the accuracy and performance of the algorithm.

A rectangular area surrounded by the imin, imax, jmin and jmax obtained in the previous operation is reserved, and the size of the image is converted into standard sizes m-std and n-std. Image interception is performed according to the image positioning points to acquire a minimum target image. Meanwhile, the acquired minimum target image is scaled so that the two comparison images are compared in the same dimension, thereby improving the comparison accuracy.

At operation 1006, a fine-grained comparison is performed on a length and a width of each line segment contained in feeder lines in the minimum target feeder line image and a standard length and a standard width of a corresponding line segment contained in feeder lines in the standard feeder line feature grayscale image, and it is determined that the feeder line is installed incorrectly in a case of an unmatched fine-grained comparison result; and proceeds to operation 1008 in a case of a matched fine-grained comparison result.

In specific implementations, line segments of the feeder line may be numbered in sequence, and a difference between a coordinate Y value of a highest point and a coordinate Y value of a lowest point of each line segment, i.e., a length L of the line segment, is calculated; and a difference between a coordinate X value of a leftmost point and a coordinate X value of a rightmost point of each line segment, i.e., a width W of the line segment, is calculated. The calculation results are compared with a length L_std and a width W_std of a line segment with the same number in the standard feature grayscale image. A lower threshold ε1 and a higher threshold ε2 for the size are predefined, and if L_std*ε1<L<L_std*ε2 and W_std*ε1<W<W_std*ε2, it indicates that the size comparison is passed and a next operation may be performed. Otherwise, it is determined that the feeder line is installed incorrectly, and a notification is sent to a client. In this operation, the target image and the standard image are compared with each other in line segments and finer granularity, so that more detailed index conditions are concerned.

At operation 1008, an overall feature comparison is performed with a specific mean variance, where the specific mean variance is determined by a mean value of grayscale values of all pixels contained in a line segment of a feeder line in the minimum target feeder line image and contained in a corresponding line segment of a corresponding feeder line in the standard feeder line feature grayscale image, it is determined that the feeder line is installed incorrectly in a case of an unmatched overall comparison result; and it is determined that the feeder line is installed correctly in a case of a matched overall comparison result.

Specifically, a mean value of grayscale values of all pixels included in the line segment of the feeder line and in the standard grayscale image is recorded as E, and a variance between the line segment of the feeder line and E, and a variance between the standard line segment and E, are respectively calculated and recorded as D1 and D2. A variance threshold ε3 is predefined, and if D1+D2<ε3, all comparisons are completed, and it is determined that the feeder line is installed correctly; and otherwise, it is determined that the feeder line is installed incorrectly. In this operation, fine-grained indexes are calculated in correlation by an algorithm, and granularity indexes of each system are regarded as a whole system for judgment, so that a difference between the fine-grained indexes is amplified. The method has the advantages that problems are easier to find after the microscopic difference is amplified, so that the overall quality of the algorithm is improved, and the accuracy of the result is ensured.

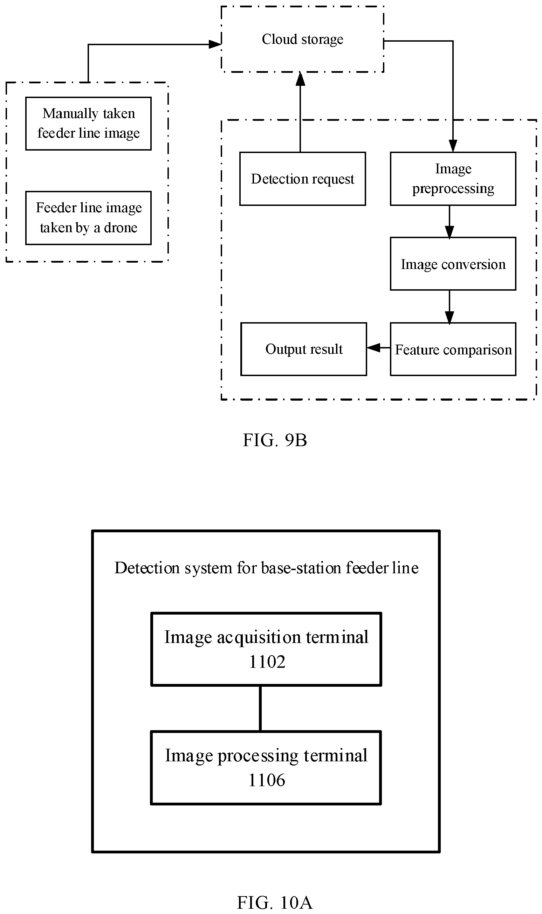

The entire detection operation is streamlined as shown in FIG. 9B.

First, an image acquisition terminal captures feeder line images manually or through a drone, and uploads the images to a cloud server for corresponding storage. Then, an image processing terminal sends a detection request to the cloud server, and acquires a corresponding feeder line image. The image processing terminal performs operations such as preprocessing, image conversion and the like on the feeder line image. Next, the converted grayscale feature image is compared with a standard feeder line image in a standard library, to determine whether a feeder line is installed correctly according to a feature comparison result.

According to the above technical solution of the present disclosure, the image acquisition terminal sends the acquired feeder line image of a base station to be detected to the cloud server, and the cloud server stores the acquired feeder line image and an identifier of the corresponding base station to be detected in correspondence; the image processing terminal may search for and acquire a target feeder line image from the cloud server according to the detection request, perform image preprocessing on the target feeder line image to convert the target feeder line image into a feature grayscale image, compare the obtained feature grayscale image with a standard feeder line feature grayscale image, and determine, according to a comparison result, whether a feeder line of a target base station to be detected is correctly installed. In this manner, automatic detection can be realized, detection cost and potential safety hazards are reduced, and detection accuracy and efficiency are improved.

Referring to FIG. 10A, the present disclosure provides a detection system for a base-station feeder line 1100, including an image acquisition terminal 1102 and an image processing terminal 1106.

The image acquisition terminal 1102 is configured to acquire a feeder line image of a base station to be detected, and store the acquired feeder line image and an identifier of the base station to be detected in correspondence.

The image processing terminal 1106 is configured to search for and acquire, based on an identifier of a target base station to be detected in a detection request, a matched target feeder line image.

The image processing terminal 1106 is further configured to perform image preprocessing on the target feeder line image, and convert the target feeder line image subjected to the image preprocessing into a feature grayscale image.

The image processing terminal 1106 is further configured to compare the feature grayscale image with a standard feeder line feature grayscale image, and determine, according to a comparison result, whether a feeder line of the target base station to be detected is correctly installed.

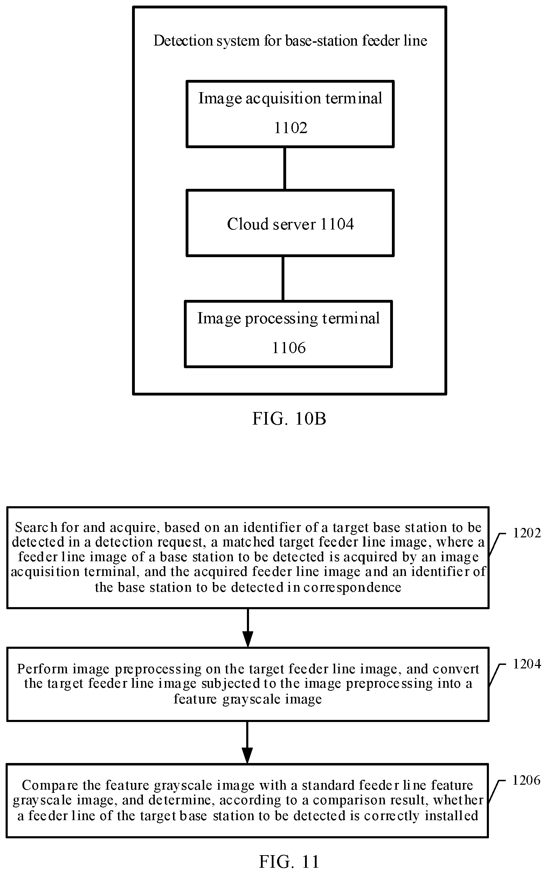

Referring to FIG. 10B, the present disclosure provides a detection system for a base-station feeder line 1100, including an image acquisition terminal 1102, a cloud server 1104, and an image processing terminal 1106.

The image acquisition terminal 1102 is configured to acquire a feeder line image of a base station to be detected, and send the feeder line image and an identifier of the base station to be detected to the cloud server 1104, so that the cloud server 1104 stores the acquired feeder line image and the identifier of the base station to be detected in correspondence.

The image processing terminal 1106 is configured to search for and acquire, based on an identifier of a target base station to be detected in a detection request, a matched target feeder line image from the cloud server 1104.

The image processing terminal 1106 is further configured to perform image preprocessing on the target feeder line image, and convert the target feeder line image subjected to the image preprocessing into a feature grayscale image.

The image processing terminal 1106 is further configured to compare the feature grayscale image with a standard feeder line feature grayscale image, and determine, according to a comparison result, whether a feeder line of the target base station to be detected is correctly installed.

The image acquisition terminal 1102 may be a contact-type handheld image capturing device, and when acquiring the feeder line image of the base station to be detected, the image acquisition terminal 1102 may capture the feeder line image of the base station to be detected in response to a touch control action of a user. The image acquisition terminal 1102 may be a non-contact image capturing device, and when acquiring the feeder line image of the base station to be detected, the image acquisition terminal 1102 may capture the feeder line image of the base station to be detected in response to remote control of a user.

When performing image preprocessing on the target feeder line image, the image processing terminal 1106 may scale the target feeder line image according to a pixel detection requirement; select feeder line markers from the scaled target feeder line image, and extract HSV values of the feeder line markers; and perform, based on the extracted HSV values of the feeder line markers, HSV image format conversion on the scaled target feeder line image.

When converting the target feeder line image subjected to the image preprocessing into the feature grayscale image, the image processing terminal 1106 may process the converted HSV target feeder line image by an edge detection technique, to obtain an edge contour of the feeder line markers; perform median filtering on the HSV target feeder line image subjected to the edge detection; and perform a morphological operation of dilation or erosion on the edge of the feeder line markers in the HSV target feeder line image after the median filtering.

The edge detection technique may include: Sobel edge detection operator, Laplacian edge detection operator, and Canny edge detection operator.

When processing the converted HSV target feeder line image with the Canny edge detection operator, the image processing terminal 1106 may use a Gaussian filter to smooth and filter noise from the converted HSV target feeder line image; calculate a gradient value and a direction of each pixel in the processed HSV target feeder line image; perform, based on the calculated gradient value and direction, non-maximum suppression on each pixel; further optimize the edge using dual threshold edge detection, mark an edge pixel as a strong edge pixel if the gradient value of the edge pixel is greater than a higher threshold, mark an edge pixel as a weak edge pixel if the gradient value of the edge pixel is less than the higher threshold and greater than a lower threshold; and suppress an edge pixel if the gradient value of the edge pixel is less than the lower threshold; and determine a final edge contour of the feeder line markers by suppressing isolated weak edge pixels.

When comparing the feature grayscale image with the standard feeder line feature grayscale image, and determining, according to the comparison result, whether the feeder line of the target base station to be detected is correctly installed, the image processing terminal 1106 may perform a coarse-grained comparison on the feature grayscale image and the standard feeder line feature grayscale image through edge contour searching and line segment counting, and determine that the feeder line is installed incorrectly in a case of an unmatched coarse-grained comparison result; further position and register feeder lines in the feature grayscale image in a case of a matched coarse-grained comparison result, and intercept to obtain a minimum target feeder line image, where the minimum target feeder line image is in the same dimensional space as the standard feeder line feature grayscale image; perform a fine-grained comparison on a length and a width of each line segment contained in feeder lines in the minimum target feeder line image and a standard length and a standard width of a corresponding line segment contained in feeder lines in the standard feeder line feature grayscale image, and determine that the feeder line is installed incorrectly in a case of an unmatched fine-grained comparison result; further perform an overall feature comparison with a specific mean variance in a case of a matched fine-grained comparison result, where the specific mean variance is determined by a mean value of grayscale values of all pixels contained in a line segment of a feeder line in the minimum target feeder line image and contained in a corresponding line segment of a corresponding feeder line in the standard feeder line feature grayscale image, determine that the feeder line is installed incorrectly in a case of an unmatched overall comparison result; and determine that the feeder line is installed correctly in a case of a matched overall comparison result.

According to the above technical solution of the present disclosure, an image acquisition terminal sends the acquired feeder line image of a base station to be detected to the cloud server, and the cloud server stores the acquired feeder line image and an identifier of the corresponding base station to be detected in correspondence; the image processing terminal may search for and acquire a target feeder line image from the cloud server according to the detection request, perform image preprocessing on the target feeder line image to convert the target feeder line image into the feature grayscale image, compare the obtained feature grayscale image with the standard feeder line feature grayscale image, and determine, according to the comparison result, whether a feeder line of the target base station to be detected is correctly installed. In this manner, automatic detection can be realized, detection cost and potential safety hazards are reduced, and detection accuracy and efficiency are improved.

The present disclosure further provides an image processing method, which, as shown in FIG. 11, may include the following operations 1202 to 1206.

At operation 1202, search for and acquire, based on an identifier of a target base station to be detected in a detection request, a matched target feeder line image, where an image acquisition terminal acquires a feeder line image of a base station to be detected, and stores the acquired feeder line image and an identifier of the base station to be detected in correspondence.

The image acquisition terminal may send the acquired feeder line image and the identifier of the base station to be detected to an image processing terminal or a cloud server for corresponding storage. Accordingly, the image processing terminal may search for and acquire the matched target feeder line image locally or from the cloud server.

At operation 1204, perform image preprocessing on the target feeder line image, and convert the target feeder line image subjected to the image preprocessing into a feature grayscale image.

At operation 1206, compare the feature grayscale image with a standard feeder line feature grayscale image, and determine, according to a comparison result, whether a feeder line of the target base station to be detected is correctly installed.

The performing image preprocessing on the target feeder line image may include: scaling the target feeder line image according to a pixel detection requirement; selecting feeder line markers from the scaled target feeder line image, and extracting HSV values of the feeder line markers; and performing, based on the extracted HSV values of the feeder line markers, HSV image format conversion on the scaled target feeder line image.

The converting the target feeder line image subjected to the image preprocessing into the feature grayscale image may include: processing the converted HSV target feeder line image by an edge detection technique, to obtain an edge contour of the feeder line markers; performing median filtering on the HSV target feeder line image subjected to the edge detection; and performing a morphological operation of dilation or erosion on the edge of the feeder line markers in the HSV target feeder line image after the median filtering.

The edge detection technique may include: Sobel edge detection operator, Laplacian edge detection operator, and Canny edge detection operator.

When the converted HSV target feeder line image is processed by the Canny edge detection operator, a Gaussian filter may be used to smooth and filter noise from the converted HSV target feeder line image; a gradient value and a direction of each pixel in the processed HSV target feeder line image are calculated; non-maximum suppression is performed on each pixel based on the calculated gradient value and direction; the edge is further optimized using dual threshold edge detection, an edge pixel is marked as a strong edge pixel if the gradient value of the edge pixel is greater than a higher threshold, an edge pixel is marked as a weak edge pixel if the gradient value of the edge pixel is less than the higher threshold and greater than a lower threshold; and an edge pixel is marked as a suppressed edge pixel if the gradient value of the edge pixel is less than the lower threshold; and a final edge contour of the feeder line markers is determined by suppressing isolated weak edge pixels.

The comparing the feature grayscale image with the standard feeder line feature grayscale image, and determining, according to the comparison result, whether the feeder line of the target base station to be detected is correctly installed may include: performing a coarse-grained comparison on the feature grayscale image and the standard feeder line feature grayscale image through edge contour searching and line segment counting, and determining that the feeder line is installed incorrectly in a case of an unmatched coarse-grained comparison result; further positioning and registering feeder lines in the feature grayscale image in a case of a matched coarse-grained comparison result, and intercepting to obtain a minimum target feeder line image, where the minimum target feeder line image is in the same dimensional space as the standard feeder line feature grayscale image; performing a fine-grained comparison on a length and a width of each line segment contained in feeder lines in the minimum target feeder line image and a standard length and a standard width of a corresponding line segment contained in feeder lines in the standard feeder line feature grayscale image, and determining that the feeder line is installed incorrectly in a case of an unmatched fine-grained comparison result; further performing an overall feature comparison with a specific mean variance in a case of a matched fine-grained comparison result, where the specific mean variance is determined by a mean value of grayscale values of all pixels contained in a line segment of a feeder line in the minimum target feeder line image and contained in a corresponding line segment of a corresponding feeder line in the standard feeder line feature grayscale image, determining that the feeder line is installed incorrectly in a case of an unmatched overall comparison result; and determining that the feeder line is installed correctly in a case of a matched overall comparison result.

According to the above technical solution of the present disclosure, an image processing terminal may search for and acquire the target feeder line image from the cloud server according to the detection request, perform image preprocessing on the target feeder line image to convert the target feeder line image into the feature grayscale image, compare the obtained feature grayscale image with the standard feeder line feature grayscale image, and determine, according to the comparison result, whether a feeder line of the target base station to be detected is correctly installed. In this manner, automatic detection can be realized, detection cost and potential safety hazards are reduced, and detection accuracy and efficiency are improved.

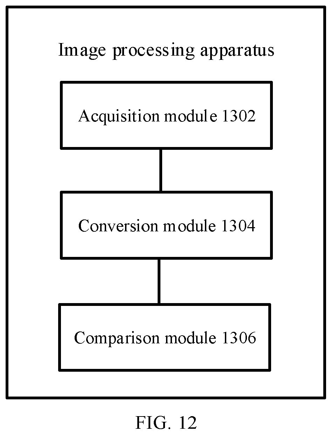

The present disclosure further provides an image processing apparatus. Referring to FIG. 12, an image processing apparatus 1300 may include an acquisition module 1302, a conversion module 1304, and a comparison module 1306.

The acquisition module 1302 is configured to search for and acquire, based on an identifier of a target base station to be detected in a detection request, a matched target feeder line image. An image acquisition terminal acquires a feeder line image of a base station to be detected, and stores the acquired feeder line image and an identifier of the base station to be detected in correspondence.

The conversion module 1304 is configured to perform image preprocessing on the target feeder line image, and convert the target feeder line image subjected to the image preprocessing into a feature grayscale image.

The comparison module 1306 is configured to compare the feature grayscale image with a standard feeder line feature grayscale image, and determine, according to a comparison result, whether a feeder line of the target base station to be detected is correctly installed.

When the conversion module 1304 performs image preprocessing on the target feeder line image, the target feeder line image may be scaled according to a pixel detection requirement; feeder line markers are selected from the scaled target feeder line image, and HSV values of the feeder line markers are extracted; and based on the extracted HSV values of the feeder line markers, HSV image format conversion is performed on the scaled target feeder line image.

When the conversion module 1304 converts the target feeder line image subjected to the image preprocessing into a feature grayscale image, the converted HSV target feeder line image may be processed by an edge detection technique, to obtain an edge contour of the feeder line markers; median filtering is performed on the HSV target feeder line image subjected to the edge detection; and a morphological operation of dilation or erosion is performed on the edge of the feeder line markers in the HSV target feeder line image after the median filtering.

The edge detection technique may include: Sobel edge detection operator, Laplacian edge detection operator, and Canny edge detection operator.

When the conversion module 1304 processes the converted HSV target feeder line image by the Canny edge detection operator, a Gaussian filter may be used to smooth and filter noise from the converted HSV target feeder line image; a gradient value and a direction of each pixel in the processed HSV target feeder line image are calculated; non-maximum suppression is performed on each pixel based on the calculated gradient value and direction; the edge is further optimized using dual threshold edge detection, an edge pixel is marked as a strong edge pixel if the gradient value of the edge pixel is greater than a higher threshold, an edge pixel is marked as a weak edge pixel if the gradient value of the edge pixel is less than the higher threshold and greater than a lower threshold; and an edge pixel is marked as a suppressed edge pixel if the gradient value of the edge pixel is less than the lower threshold; and a final edge contour of the feeder line markers is determined by suppressing isolated weak edge pixels.

When the comparison module 1306 compares the feature grayscale image with a standard feeder line feature grayscale image, and determines, according to a comparison result, whether a feeder line of a target base station to be detected is correctly installed, a coarse-grained comparison is performed on the feature grayscale image and the standard feeder line feature grayscale image through edge contour searching and line segment counting, and it is determined that the feeder line is installed incorrectly in a case of an unmatched coarse-grained comparison result. In a case of a matched coarse-grained comparison result, feeder lines in the feature grayscale image are further positioned and registered, and a minimum target feeder line image is intercepted, where the minimum target feeder line image is in the same dimensional space as the standard feeder line feature grayscale image. A fine-grained comparison is performed on a length and a width of each line segment contained in feeder lines in the minimum target feeder line image and a standard length and a standard width of a corresponding line segment contained in feeder lines in the standard feeder line feature grayscale image. In a case of an unmatched fine-grained comparison result, it is determined that the feeder line is installed incorrectly. In a case of a matched fine-grained comparison result, an overall feature comparison is further performed with a specific mean variance. The specific mean variance is determined by a mean value of grayscale values of all pixels contained in a line segment of a feeder line in the minimum target feeder line image and contained in a corresponding line segment of a corresponding feeder line in the standard feeder line feature grayscale image. In a case of an unmatched overall comparison result, it is determined that the feeder line is installed incorrectly. In a case of a matched overall comparison result, it is determined that the feeder line is installed correctly.

According to the above technical solution of the present disclosure, an image processing terminal may search for and acquire the target feeder line image from the cloud server according to the detection request, perform image preprocessing on the target feeder line image to convert the target feeder line image into the feature grayscale image, compare the obtained feature grayscale image with the standard feeder line feature grayscale image, and determine, according to the comparison result, whether a feeder line of the target base station to be detected is correctly installed. In this manner, automatic detection can be realized, detection cost and potential safety hazards are reduced, and detection accuracy and efficiency are improved.

The present disclosure further provides an electronic device, including: a processor; and a memory storing computer-executable instructions thereon which, when executed by the processor, cause the processor to perform the image processing method as shown in FIG. 11.

Meanwhile, an embodiment of the present disclosure provides a computer-readable storage medium having one or more programs stored thereon which, when executed by one or more processors, cause the one or more processors to perform the image processing method as shown in FIG. 11.

According to the above technical solution of the present disclosure, an image processing terminal may search for and acquire the target feeder line image from the cloud server according to the detection request, perform image preprocessing on the target feeder line image to convert the target feeder line image into the feature grayscale image, compare the obtained feature grayscale image with the standard feeder line feature grayscale image, and determine, according to the comparison result, whether a feeder line of the target base station to be detected is correctly installed. In this manner, automatic detection can be realized, detection cost and potential safety hazards are reduced, and detection accuracy and efficiency are improved.

The above embodiments are merely exemplary embodiments of the present disclosure, and are not intended to limit the scope of the present disclosure. Any modification, equivalent replacement, improvement or the like made within the spirit and principle of the present disclosure shall be included in the scope of the present disclosure.

The system, apparatus, module or unit illustrated in the one or more embodiments above may be specifically implemented by a computer chip or entity, or by a product with certain functionality. One typical implementation device is a computer. Specifically, the computer may be, for example, a personal computer, a laptop, a cellular telephone, a camera phone, a smartphone, a personal digital assistant, a media player, a navigation device, an email device, a game console, a tablet, a wearable device, or any combination thereof.

The computer-readable storage medium, including both permanent and non-permanent, removable and non-removable media, may implement information storage in any method or by any technique. The information may be computer-readable instructions, data structures, program modules, or the like. Examples of the computer storage medium include, but are not limited to, a phase change memory (PRAM), a static random access memory (SRAM) , a dynamic random access memory (DRAM) or any other type of random access memory (RAM), a read-only memory (ROM), an electrically erasable programmable read-only memory (EEPROM), a flash memory or any other memory technology, a compact disk read-only memory (CD-ROM), a digital versatile disk (DVD) or any other type of optical memory, a magnetic cassette, a magnetic tape magnetic disk storage or any other magnetic storage device, or any other non-transmission medium which can be used to store information that is accessible by a computing device. As defined herein, the computer readable medium does not include a transitory computer-readable medium such as a modulated data signal or a carrier wave.

It should be further noted that the term "comprising" "comprise" or any variant thereof means to be non-exclusive so that a process, method, item or device including a series of elements includes not only said elements, but also other elements not explicitly listed, or inherent elements of such processes, methods, items or devices. In the absence of more limitations, an element defined by "comprising a..." does not exclude the existence of additional identical elements in the process, method, item or device including the element.

The embodiments of the present disclosure are described in a progressive manner, and the same and similar parts among the embodiments can be referred to each other, and each embodiment focuses on differences from other embodiments. In particular, as for the system embodiment, since it is substantially similar to the method embodiment, the description is relatively simple, and reference may be made to the description of the method embodiment for relevant points.

The foregoing describes specific embodiments of the present disclosure. Other embodiments are within the scope of the following claims. In some cases, the actions or operations recited in the claims may be performed in a different order from that in the embodiments and still achieve desirable results. In addition, the processes depicted in the accompanying figures do not necessarily require the particular order shown, or sequential order, to achieve desirable results. In some implementations, multitasking and parallel processing may also be possible or even advantageous.

## Claims

1. An image processing method, comprising:
searching for and acquiring, based on an identifier of a target base station to be detected in a detection request, a matched target feeder line image, wherein an image acquisition terminal acquires a feeder line image of a base station to be detected, and stores the acquired feeder line image and an identifier of the base station to be detected in correspondence;
performing image preprocessing on the target feeder line image, and converting the target feeder line image subjected to the image preprocessing into a feature grayscale image; and
comparing the feature grayscale image with a standard feeder line feature grayscale image, and determining, according to a comparison result, whether a feeder line of the target base station to be detected is correctly installed.

2. The image processing method according to claim 1, wherein the performing image preprocessing on the target feeder line image comprises:
scaling the target feeder line image according to a pixel detection requirement;
selecting feeder line markers from the scaled target feeder line image, and extracting HSV values of the feeder line markers; and
performing, based on the extracted HSV values of the feeder line markers, HSV image format conversion on the scaled target feeder line image.

3. The image processing method according to claim 2, wherein the converting the target feeder line image subjected to the image preprocessing into the feature grayscale image comprises:
processing the converted HSV target feeder line image by an edge detection technique, to obtain an edge contour of the feeder line markers;
performing median filtering on the HSV target feeder line image subjected to the edge detection; and
performing a morphological operation of dilation or erosion on the edge of the feeder line markers in the HSV target feeder line image after the median filtering.

4. The image processing method according to claim 3, wherein the edge detection technique comprises at least: Sobel edge detection operator, Laplacian edge detection operator, or Canny edge detection operator, and
in the case of the Canny edge detection operator, the processing on the converted HSV target feeder line image comprises:
using a Gaussian filter to smooth and filter noise from the converted HSV target feeder line image;
calculating a gradient value and a direction of each pixel in the processed HSV target feeder line image;
performing, based on the calculated gradient value and direction, non-maximum suppression on each pixel;
further optimizing the edge using dual threshold edge detection, marking an edge pixel as a strong edge pixel if the gradient value of the edge pixel is greater than a higher threshold, marking an edge pixel as a weak edge pixel if the gradient value of the edge pixel is less than the higher threshold and greater than a lower threshold; and suppressing an edge pixel if the gradient value of the edge pixel is less than the lower threshold; and
determining a final edge contour of the feeder line markers by suppressing isolated weak edge pixels.

5. The image processing method according to claim 1, wherein the comparing the feature grayscale image with the standard feeder line feature grayscale image, and determining, according to the comparison result, whether the feeder line of the target base station to be detected is correctly installed comprises:
performing a coarse-grained comparison on the feature grayscale image and the standard feeder line feature grayscale image through edge contour searching and line segment counting;
determining that the feeder line is installed incorrectly in response to an unmatched coarse-grained comparison result;
positioning and registering feeder lines in the feature grayscale image in response to a matched coarse-grained comparison result, and intercepting to obtain a minimum target feeder line image, wherein the minimum target feeder line image is in the same dimensional space as the standard feeder line feature grayscale image;
performing a fine-grained comparison on a length and a width of each line segment contained in feeder lines in the minimum target feeder line image and a standard length and a standard width of a corresponding line segment contained in feeder lines in the standard feeder line feature grayscale image;
determining that the feeder line is installed incorrectly in response to an unmatched fine-grained comparison result;
performing an overall feature comparison with a specific mean variance in response to a matched fine-grained comparison result, wherein the specific mean variance is determined by a mean value of grayscale values of all pixels contained in a line segment of a feeder line in the minimum target feeder line image and contained in a corresponding line segment of a corresponding feeder line in the standard feeder line feature grayscale image;
determining that the feeder line is installed incorrectly in response to an unmatched overall comparison result; and
determining that the feeder line is installed correctly in response to a matched overall comparison result.

6. An image processing apparatus, comprising:
an acquisition module configured to search for and acquire, based on an identifier of a target base station to be detected in a detection request, a matched target feeder line image, wherein an image acquisition terminal acquires a feeder line image of a base station to be detected, and stores the acquired feeder line image and an identifier of the base station to be detected in correspondence;
a conversion module configured to perform image preprocessing on the target feeder line image, and convert the target feeder line image subjected to the image preprocessing into a feature grayscale image; and
a comparison module configured to compare the feature grayscale image with a standard feeder line feature grayscale image, and determine, according to a comparison result, whether a feeder line of the target base station to be detected is correctly installed.

7. A detection method for a base-station feeder line, comprising:
acquiring, by an image acquisition terminal, a feeder line image of a base station to be detected, and storing the acquired feeder line image and an identifier of the base station to be detected in correspondence;
searching for and acquiring, by an image processing terminal, a matched target feeder line image based on an identifier of a target base station to be detected in a detection request;
performing, by the image processing terminal, image preprocessing on the target feeder line image, and converting the target feeder line image subjected to the image preprocessing into a feature grayscale image; and
comparing, by the image processing terminal, the feature grayscale image with a standard feeder line feature grayscale image, and determining, according to a comparison result, whether a feeder line of the target base station to be detected is correctly installed.

8. The detection method for a base-station feeder line according to claim 7, wherein the image acquisition terminal is a contact-type handheld image capturing device, and the acquiring, by the image acquisition terminal, the feeder line image of the base station to be detected comprises:
capturing, by the contact-type handheld image capturing device, the feeder line image of the base station to be detected in response to a touch control action of a user, or
the image acquisition terminal is a non-contact image capturing device, and the acquiring, by the image acquisition terminal, the feeder line image of the base station to be detected comprises:
capturing, by the non-contact image capturing device, the feeder line image of the base station to be detected in response to remote control of a user.

9. The detection method for a base-station feeder line according to claim 7 or 8, wherein the storing, by the image acquisition terminal, the acquired feeder line image and the identifier of the base station to be detected in correspondence comprises:
sending, by the image acquisition terminal, the acquired feeder line image and the identifier of the base station to be detected to a cloud server so that the cloud server stores the acquired feeder line image and the identifier of the base station to be detected in correspondence, and
the searching for and acquiring, by the image processing terminal, the matched target feeder line image based on the identifier of the target base station to be detected in the detection request comprises:
searching for and acquiring, based on the identifier of the target base station to be detected in the detection request, the matched target feeder line image from the cloud server.

10. A detection system for a base-station feeder line, comprising an image acquisition terminal and an image processing terminal, wherein
the image acquisition terminal is configured to acquire a feeder line image of a base station to be detected, and store the acquired feeder line image and an identifier of the base station to be detected in correspondence;
the image processing terminal is configured to search for and acquire, based on an identifier of a target base station to be detected in a detection request, a matched target feeder line image;
the image processing terminal is configured to perform image preprocessing on the target feeder line image, and convert the target feeder line image subjected to the image preprocessing into a feature grayscale image; and
the image processing terminal is configured to compare the feature grayscale image with a standard feeder line feature grayscale image, and determine, according to a comparison result, whether a feeder line of the target base station to be detected is correctly installed.

11. An electronic device, comprising: a processor; and a memory storing computer-executable instructions thereon which, when executed by the processor, cause the processor to perform the image processing method according to any one of claims 1 to 5.

12. A computer-readable storage medium having one or more programs stored thereon which, when executed by one or more processors, cause the one or more processors to implement the image processing method according to any one of claims 1 to 5.
